# EUROPEAN PATENT APPLICATION

(11) **EP 2 660 072 A1**
(43) Date of publication of application: **06.11.2013**
(21) Application number: 11852984.1
(22) Date of filing: 12.07.2011
(51) Int. Cl.: B43K 19/00, C09D 13/00

(54) **COLOURIZED PEN WITH HIGH ELASTICITY AND PLASTICITY AND MANUFACTURING PROCESS THEREOF**

(30) Priority: 30.12.2010 CN 201010622649; 30.12.2010 CN 201010622652
(71) Applicant: Liu, Ying, Nanjing, Jiangsu 210014 (CN)
(72) Inventor: Liu, Ying, Nanjing, Jiangsu 210014 (CN)
(74) Representative: TBK
(86) International application number: PCT/CN2011/077051
(87) International publication number: WO 2012/088871

(57) **Abstract**

A colourized pen with high elasticity and plasticity is composed of 20-40 wt% of a high molecular polymer as a main part, 20-38 wt% of a white or colourless solid powder as a part for the colour carrier, 2-20 wt% of a pigment as a colouration part, and 2-20wt% of a suitable regulator as an auxiliary part. A process for manufacturing a colourized pen with high elasticity and plasticity comprises the following steps: mixing raw materials uniformly, then extrusion moulding the same at 120°C-250°C, cooling, curing and then cutting the same. The pen of the present invention has high elasticity and plasticity, is environmentally friendly and safe, and possesses a clear colour during writing; its manufacturing process is simple and environmentally friendly, and it has a wide applicability and reliable safety.

## Description

The present patent application for invention claims the priority of Chinese patent application 201010622649.9, 201010622652.0 submitted on December 30, 2010.

### Technical Field

The invention relates to the composition of a new pen and its preparation method, in particular to the composition of a high elastic-plastic color pen and its preparation method.

### Background Technology

A pen is a tool for writing and drawing. The pen disperses pigments into solid and (or) liquid media, and pigments are uniformly and particularly attached on the surface of solid materials by means of the effect of media. At all times and in all over the world, solid pens have insufficient strength and are easily broken (e.g. chalks, crayons, oil pastels, etc.), therefore, people make pencils using the method of combining "penholders" with "cartridges" in multiple layers in general; liquid pens (e.g. brush pens and dip pens) are used generally using the method of intermittent dipping and writing; later fountain pens, ball-point pens, etc. are made based on the principle of capillary tension. All these pens have a series of disadvantages such as complex making process, inconvenient use and carrying, short storage period, etc.

### Contents of Invention

The object of the invention is to provide the composition of a high elastic-plastic solid color pen that is shaped at a time, not easily broken and convenient for use and its preparation method.

The technical solution for achieving the object of the invention:
A high elastic-plastic color pen, which includes the following components expressed in weight percentage: 20∼40% high-molecular polymer, 10∼40% white or colorless solid powder, 2∼20% pigment and 0∼20% conditioning agent.
A high elastic-plastic black pen, which can also use the following components expressed in weight percentage: 20∼50% natural and/or artificial carbon-containing solid powder, 30∼60% high-molecular polymer and 0∼20% conditioning agent. Carbon-containing solid powder is a mixture of one or more of coal dust, carbon dust, graphite powder, active carbon and carbon black or powdered charcoal with the particle size less than 100µm.

Wherein: the high-molecular polymer is a mixture of one or more of polyester, polyurethane, polyolefin, polyvinyl chloride and rubber;
Pigments are prepared by natural or synthetic monochromatic pigments of different color systems.

Conditioning agents are bonding agents, surfactants or other additives; bonding agents are organic ester compounds; surfactants include one or more of stearic acid or its salts and alkane amine or its salts; other additives are paraffin or polyamide.

White or colorless solid powder is a mixture of one or more of carbonate, silicate, natural mineral powder containing carbonate or/and silicate, glass powder or lignocellulose powder. Natural mineral powder containing carbonate or/and silicate is a mixture of one or more of kaoline, diatomite, talcum powder, marble powder or montmorillonite;

The steps of a method for preparing a high elastic-plastic color pen are as follows: firstly mix high-molecular polymer, pigment and conditioning agent in a high speed mixer to uniformity, then add the mixture into an extrusion molding device for heating, extrusion and stretching, and form a strip product with certain specification, size and shape; after cooling and cutting, a high elastic-plastic color pen can be obtained. The heating temperature is 120∼250°C during extrusion molding.

Compared with the existing techniques, the present invention has remarkable advantages: 1. simple and environmentally friendly fabrication process and compact equipment: it is only needed to finely mix various raw materials and then carry out thermoplastic stretching and shaping; 2. convenient use: according to different usage occasions, the product of the present invention can be used to bottom at a time or only needs to be simply cut (to ensure the requirements of writing fineness); in addition, the product is not sticky, cannot be broken and does not fade and stain; the writing color of the product is clear; 3. convenient carrying: due to high elasticity and plasticity, the pen can be bent and will not be easily broken and can be conveniently carried; 4. convenient preservation: due to high dispersion and organic combination of chromosomes with chromatophores, the plastic pen does not fade and discolor easily, and the calligraphy and painting products obtained with the pen do not discolor and fade easily and can be kept for a long time; 5. wide applicability: the product of the present invention can be used easily in writing with bright color on the surface of different materials such as paper, cloth, plates, wall, etc.; the product can also be used under extreme conditions such as high temperature, low temperature, etc.; 6. safety: due to high elasticity, tenacity and plasticity, the pen of the present invention will not do hard harm to human body during use; in addition, the product uses natural compounds or green chemical raw materials, which are safe to human body and have no pollution on environment, so the pen of the present invention is an environmentally friendly and safe product.

### Description of Figures

Figure 1 is a process schematic showing the method for preparing the high elastic-plastic color pen according to the present invention.
Figure 2 is a process schematic showing the method for preparing the high elastic-plastic black pen according to the present invention.

### Detailed Description of the Embodiments

The high elastic-plastic color pen of the present invention uses 20∼40% high-molecular polymer as the main body, 20∼38% white or colorless solid powder as the chromatophore, 2∼20% pigment as the chromosome and 2∼20% conditioning agent; after mixing them to uniformity and then extrusion molding of the mixture at 120∼250°C, after being cooled, solidified and cut, the product of the present invention is obtained.

Wherein the high-molecular polymer is a mixture of one or more of polyester, polyurethane, polyolefin, polyvinyl chloride and rubber; solid powder is any one of carbonate, silicate, mineral powder (e.g. kaoline, diatomite, talcum powder, montmorillonite, etc.) containing carbonate and (or) silicate, glass powder or lignocellulose powder with the particle size less than 100µm; pigment is natural or synthetic monochromatic pigment of different color systems; conditioning agents are organic additives used to adjust elasticity and plasticity or improve processing performance, including bonding agents (e.g. organic ester compounds etc.), surfactants (e.g. stearic acid and its salts, alkane amine and its salts, etc.) and other additives (e.g. paraffin, chlorinated paraffin, polyamide, etc.).

The principle of the present invention is as follows: use white or colorless solid power as the chromatophore and the compound pigment mixed by monochromatic (base color) pigment as the chromosome; they are uniformly dispersed in high-molecular polymer through mixing and extrusion by means of the dispersity and cohesiveness of some organic additives at a certain temperature, so as to form a high-molecular composite material; after being cooled, solidified, shaped and cut, a color pen of the invention which has high elasticity, weather resistance and bright color and can be used for direct writing is formed.

The high elastic-plastic black pen of the invention can be obtained by using the above method, i.e. mixing three primitive colors, such as red, yellow and blue, to obtain black pigment, or by using the following method: use 20∼50% natural or/and artificial carbon-containing solid powder expressed in weight percentage as the pigment, 30∼60% high-molecular polymer as the carrier and 0∼20% conditioning agent.

The steps of the method for preparing a high elastic-plastic black pen are as follows: firstly mix pigment, high-molecular polymer and conditioning agent in a high speed mixer to uniformity, then add the mixture into an extrusion molding device for heating, extrusion and stretching at 120∼250°C, and form a strip product with certain specification and size; after cooling and cutting of the strip product, a high elastic-plastic black pen can be obtained.

Wherein the carbon-containing powder is any one of coal dust, carbon powder, graphite powder, active carbon, carbon black and powdered charcoal with the particle size less than 100 µm; high-molecular polymer is a mixture of one or more of polyester, polyurethane, polyolefin, polyvinyl chloride and rubber; conditioning agents are organic additives used to adjust elasticity and plasticity or improve processing performance, such as organic ester compounds, surfactants, etc.

The principle of the present invention is as follows: carbon-containing powder is a sort of natural or artificial black pigment; the pigment is uniformly dispersed in high-molecular polymer through mixing and extrusion by means of the dispersity and cohesiveness of some organic additives at a certain temperature, so as to form a high-molecular composite material; after being cooled, solidified and shaped, a black pen which has elasticity, plasticity and weather resistance and can be used for direct writing is formed.

Hereunder the present invention will be further detailed with reference to the accompanying drawings.

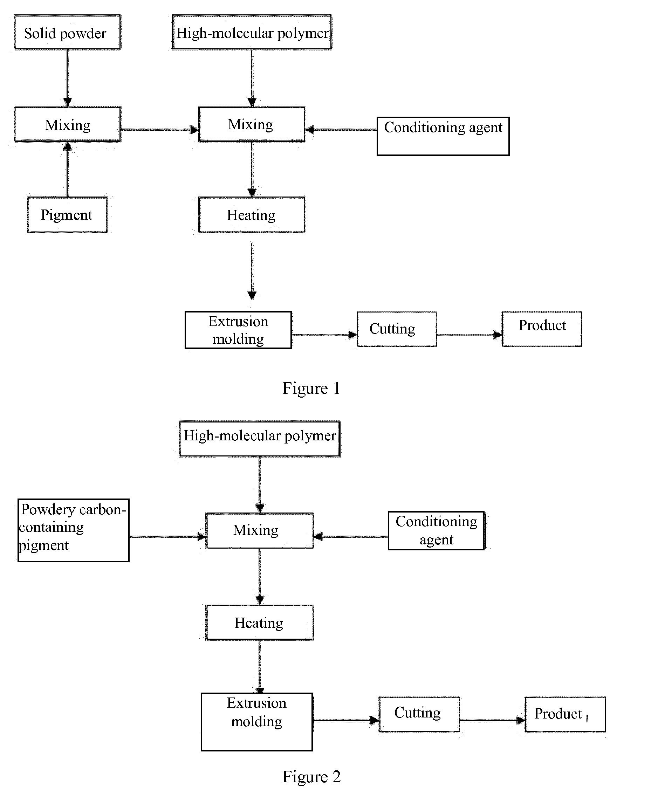

Figure 1 is a process schematic showing the method for preparing the high elastic-plastic color pen according to the present invention. As shown in Figure 1, embodiments 1 to 15 are completed.

### Embodiment 1:

The formulation of a high elastic-plastic red pen is as follows:
40 portions of polyvinyl chloride; 38 portions of calcium carbonate; 2 portions of pigment red; 10 portions of chlorinated paraffin; 5 portions of paraffin

After mixing the above raw materials in a high speed mixer to uniformity, add the mixture into an extrusion molding device; through heating, extrusion and stretching at 250°C, form a strip product with certain specification, size and shape; after cutting, a high elastic-plastic red pen is obtained.

### Embodiment 2:

The formulation of a high elastic-plastic pink pen is as follows:
20 portions of polypropylene; 20 portions of polyethylene; 25 portions of calcium carbonate; 12 portions of talcum powder; 10 portions of pigment pink; 8 portions of chlorinated paraffin; 5 portions of stearic acid

After mixing the above raw materials in a high speed mixer to uniformity, add the mixture into an extrusion molding device; through heating, extrusion and stretching at 100°C, form a strip product with certain specification, size and shape; after cutting, a high elastic-plastic pink pen is obtained.

### Embodiment 3:

The formulation of the high elastic-plastic mauve pen is as follows:
20 portions of polyethylene; 32 portions of talcum powder; 5 portions of diatomite; 13 portions of pigment mauve; 12 portions of stearic acid; 8 portions of abietin

After mixing the above raw materials in a high speed mixer to uniformity, add the mixture into an extrusion molding device; through heating, extrusion and stretching at 150°C, form a strip product with certain specification, size and shape; after cutting, a high elastic-plastic mauve pen is obtained.

### Embodiment 4:

The formulation of a high elastic-plastic orange pen is as follows:
40 portions of polypropylene chloride; 10 portions of polyethylene glycol; 10 portions of calcium carbonate; 10 portions of kaoline; 7 portions of pigment orange; 5 portions of sodium stearate; 3 portions of paraffin

After mixing the above raw materials in a high speed mixer to uniformity, add the mixture into an extrusion molding device; through heating, extrusion and stretching at 200°C, form a strip product with certain specification, size and shape; after cutting, a high elastic-plastic orange pen is obtained.

### Embodiment 5:

The formulation of a high elastic-plastic saffron yellow pen is as follows:
15 portions of polyisobutene; 25 portions of polyvinyl chloride; 15 portions of talcum powder; 15 portions of kaoline; 8 portions of pigment red; 12 portions of pigment yellow; 10 portions of polycarbonate

After mixing the above raw materials in a high speed mixer to uniformity, add the mixture into an extrusion molding device; through heating, extrusion and stretching at 220°C, form a strip product with certain specification, size and shape; after cutting, a high elastic-plastic saffron yellow pen is obtained.

### Embodiment 6:

The formulation of the high elastic-plastic yellow pen is as follows:
20 portions of polyethylene; 10 portions of Ethylene Propylene Rubber (EPR); 25 portions of talcum powder; 12 portions of montmorillonite; 13 portions of pigment yellow; 5 portions of chlorinated paraffin; 15 portions of dibutyl sebacate

After mixing the above raw materials in a high speed mixer to uniformity, add the mixture into an extrusion molding device; through heating, extrusion and stretching at 180°C, form a strip product with certain specification, size and shape; after cutting, a high elastic-plastic yellow pen is obtained.

### Embodiment 7:

The formulation of a high elastic-plastic light yellow pen is as follows:
23 portions of polyethylene; 10 portions of Ethylene Propylene Rubber (EPR); 22 portions of talcum powder; 15 portions of montmorillonite; 15 portions of pigment light yellow; 5 portions of chlorinated paraffin; 15 portions of dibutyl sebacate

After mixing the above raw materials in a high speed mixer to uniformity, add the mixture into an extrusion molding device; through heating, extrusion and stretching at 160°C, form a strip product with certain specification, size and shape; after cutting, a high elastic-plastic light yellow pen is obtained.

### Embodiment 8:

The formulation of a high elastic-plastic grass green pen is as follows:
20 portions of polyethylene; 20 portions of polyurethane; 20 portions of glass powder; 18 portions of diatomite; 8 portions of pigment yellow; 12 portions of pigment green; 2 portions of polyisobutylene succinimide

After mixing the above raw materials in a high speed mixer to uniformity, add the mixture into an extrusion molding device; through heating, extrusion and stretching at 120°C, form a strip product with certain specification, size and shape; after cutting, a high elastic-plastic grass green pen is obtained.

### Embodiment 9:

The formulation of a high elastic-plastic green pen is as follows:
20 portions of polyvinyl chloride; 20 portions of polyisobutylene; 26 portions of calcium carbonate; 10 portions of kaoline; 6 portions of pigment green; 9 portions of chlorinated paraffin; 9 portions of diethyl phthalate

After mixing the above raw materials in a high speed mixer to uniformity, add the mixture into an extrusion molding device; through heating, extrusion and stretching at 190°C, form a strip product with certain specification, size and shape; after cutting, a high elastic-plastic green pen is obtained.

### Embodiment 10:

The formulation of a high elastic-plastic sapphire pen is as follows:
20 portions of polyvinyl chloride; 20 portions of polyisobutylene; 20 portions of calcium carbonate; 10 portions of kaoline; 20 portions of pigment ultramarine; 5 portions of chlorinated paraffin; 5 portions of paraffin

After mixing the above raw materials in a high speed mixer to uniformity, add the mixture into an extrusion molding device; through heating, extrusion and stretching at 170°C, form a strip product with certain specification, size and shape; after cutting, a high elastic-plastic sapphire pen is obtained.

### Embodiment 11:

The formulation of a high elastic-plastic blue pen is as follows:
25 portions of polyethylene; 15 portions of nitrile butadiene rubber (NBR); 20 portions of marble powder; 18 portions of kaoline; 10 portions of pigment blue; 7 portions of chlorinated paraffin; 5 portions of paraffin

After mixing the above raw materials in a high speed mixer to uniformity, add the mixture into an extrusion molding device; through heating, extrusion and stretching at 160°C, form a strip product with certain specification, size and shape; after cutting, a high elastic-plastic blue pen is obtained.

### Embodiment 12:

The formulation of a high elastic-plastic purple pen is as follows:
30 portions of polypropylene; 10 portions of neoprene; 20 portions of talcum powder; 10 portions of wood flour, 15 portions of pigment purple; 5 portions of Span-60; 5 portions of paraffin

After mixing the above raw materials in a high speed mixer to uniformity, add the mixture into an extrusion molding device; through heating, extrusion and stretching at 160°C, form a strip product with certain specification, size and shape; after cutting, a high elastic-plastic purple pen is obtained.

### Embodiment 13:

The formulation of a high elastic-plastic brown pen is as follows:
30 portions of polyvinyl chloride; 10 portions of polychloroprene; 30 portions of talcum powder; 6 portions of pigment red; 6 portions of pigment yellow; 6 portions of pigment blue; 5 portions of paraffin; 7 portions of Span-80

After mixing the above raw materials in a high speed mixer to uniformity, add the mixture into an extrusion molding device; through heating, extrusion and stretching at 170°C, form a strip product with certain specification, size and shape; after cutting, a high elastic-plastic brown pen is obtained.

### Embodiment 14:

The formulation of a high elastic-plastic grey pen is as follows:
30 portions of polyisobutene; 20 portions of talcum powder; 10 portions of glass powder; 10 portions of polyethylene glycol; 10 portions of pigment white; 5 portions of pigment black; 5 portions of hemp rod carbon; 10 portions of paraffin

After mixing the above raw materials in a high speed mixer to uniformity, add the mixture into an extrusion molding device; through heating, extrusion and stretching at 110°C, form a strip product with certain specification, size and shape; after cutting, a high elastic-plastic grey pen is obtained.

### Embodiment 15:

The formulation of a high elastic-plastic white pen is as follows:
20 portions of polystyrene; 10 portions of polyvinyl chloride; 15 portions of talcum powder; 25 portions of big white powder; 15 portions of pigment white; 10 portions of calcium stearate; 5 portions of chlorinated paraffin

After mixing the above raw materials in a high speed mixer to uniformity, add the mixture into an extrusion molding device; through heating, extrusion and stretching at 110°C, form a strip product with certain specification, size and shape; after cutting, a high elastic-plastic white pen is obtained.

Figure 2 is a process schematic showing the method for preparing the high elastic-plastic black pen according to the invention. As shown in Figure 2, embodiments 16 to 21 are completed.

### Embodiment 16

Firstly, accurately weigh 200g of coal dust with 100µm in average particle diameter, 600g of polyvinyl chloride, 150g of chlorinated paraffin and 50g of dimethyl succinate; then after mixing them in a high speed mixer to uniformity, add the mixture into an extrusion molding machine; through heating, extrusion and stretching at 250°C, and form a strip product with certain specification, size and shape; after cutting, a high elastic-plastic black pen is obtained.

### Embodiment 17

Firstly, accurately weigh 350g of carbon powder with 50µm in average particle diameter, 150g of carbon black with 25µm in average particle diameter, 300g of polyethylene, 100g of stearic acid, 50g of zinc stearate and 50g of polycarbonate; then after mixing them in a high speed mixer to uniformity, add the mixture into an extrusion molding machine; through heating, extrusion and stretching at 120°C, and form a strip product with certain specification, size and shape; after cutting, a high elastic-plastic black pen is obtained.

### Embodiment 18

Firstly, accurately weigh 250g of graphite powder with 20µm in average particle diameter, 155g of charcoal black with 25µm in average particle diameter, 285g of polypropylene chloride, 165g of polypropylene, 100g of talcum powder, 25g of octadecyl amine acetate and 25g of cyclopentanecarboxylic acid dipropyl phthalate; then after mixing them in a high speed mixer to uniformity, add the mixture into an extrusion molding machine; through heating, extrusion and stretching at 150°C, and form a strip product with certain specification, size and shape; after cutting, a high elastic-plastic black pen is obtained.

### Embodiment 19

Firstly, accurately weigh 250g of carbon black with 10µm in average particle diameter, 150g of coal dust with 20µm in average particle diameter, 300g of polyethylene, 200g of polypropylene and 100g of polyurethane; then after mixing them in a high speed mixer to uniformity, add the mixture into an extrusion molding machine; through heating, extrusion and stretching at 140°C, and form a strip product with certain specification, size and shape; after cutting, a high elastic-plastic black pen is obtained.

### Embodiment 20

Firstly, accurately weigh 700g of polyvinyl chloride, 150g of polyethylene, 800g of calcium carbonate, 200g of pigment black, 40g of paraffin, 40g of liquid paraffin and 70g of chlorobutyl ester; then after mixing them in a high speed mixer to uniformity, add the mixture into an extrusion molding machine; through heating, extrusion and stretching at 120°C, and form a strip product with certain specification, size and shape; after cutting, a high elastic-plastic black pen is obtained.

### Embodiment 21

Firstly, accurately weigh 600g of big white powder, 300g of carbon powder, 80g of pigment red, 80g of pigment yellow, 80g of pigment blue, 600g of polyvinyl chloride, 120g of liquid paraffin and 120g of dibutyl sebacate; then after mixing them in a high speed mixer to uniformity, add the mixture into an extrusion molding machine; through heating, extrusion and stretching at 120°C, and form a strip product with certain specification, size and shape; after cutting, a high elastic-plastic black pen is obtained.

The high elastic-plastic pens prepared in embodiments 1 to 21 all can be bent into "U" shape without being broken.

## Claims

1. A high elastic-plastic color pen, which comprises the following components expressed in weight percentage: 20∼40% high-molecular polymer, 10∼40% white or colorless solid powder, 2∼20% pigment and 0∼20% conditioning agent.

2. The high elastic-plastic color pen according to claim 1, which comprises the following components expressed in weight percentage: 20∼50% natural or/and artificial carbon-containing solid powder, 30∼60% high-molecular polymer, and 0∼20% conditioning agent.

3. The high elastic-plastic color pen according to claim 1 or claim 2, wherein the high-molecular polymer is a mixture of one or more of polyester, polyurethane, polyolefin, polyvinyl chloride and rubber.

4. The high elastic-plastic color pen of according to claim 1 or claim 2, wherein the pigments are prepared by natural or synthetic monochromatic pigments of different color systems.

5. The high elastic-plastic color pen according to claim 1 or claim 2, wherein the conditioning agents are bonding agents, surfactants and other additives.

6. The high elastic-plastic color pen according to claim 1, wherein the white or colorless solid powder is a mixture of one or more of carbonate, silicate, natural mineral powder containing carbonate and/or silicate, glass powder or lignocellulose powder.

7. The high elastic-plastic color pen according to claim 6, wherein the natural mineral powder containing carbonate and/or silicate is kaoline, diatomite, talcum powder, marble powder or montmorillonite.

8. The high elastic-plastic color pen according to claim 5, wherein the bonding agents are organic ester compounds; surfactants are stearic acid or its salts and alkane amine or its salts; other additives are paraffin or polyamide.

9. The high elastic-plastic black pen according to claim 2, wherein, the carbon-containing solid powder is a mixture of one or more of coal dust, carbon dust, graphite powder, active carbon and carbon black or powdered charcoal with the particle size less than 100µm.

10. A method for preparing a high elastic-plastic color pen, wherein, comprising the following steps: firstly mix high-molecular polymer, pigment and conditioning agent in a high speed mixer to uniformity, then add the mixture into an extrusion molding device for heating, extrusion and stretching at 120∼250°C, and form a strip product with certain specification, size and shape; after cooling and cutting, a high elastic-plastic color pen can be obtained.
